# EUROPEAN PATENT APPLICATION

(11) **EP 4 778 664 A1**
(43) Date of publication of application: **22.07.2026**
(21) Application number: 26151353.5
(22) Date of filing: 12.01.2026
(51) Int. Cl.: B23K 26/12, B23K 26/142, B23K 26/38

(54) **DUST REMOVAL LASER CUTTING APPARATUS**

(30) Priority: 20.01.2025 CN 202510084189
(71) Applicant: Greensun Inc., Shenzhen, Guangdong 518110 (CN)
(72) Inventor: LU, Shuli, Guangdong, 518110 (CN); JIANG, Bin, Guangdong, 518110 (CN); XIONG, Jianqun, Guangdong, 518110 (CN); XUE, Jinxing, Guangdong, 518110 (CN); YANG, Long, Guangdong, 518110 (CN); ZHOU, Xiaopei, Guangdong, 518110 (CN); MAO, Jiahao, Guangdong, 518110 (CN)
(74) Representative: Porta & Consulenti Associati S.p.A.

(57) **Abstract**

A dust removal laser cutting apparatus is provided, which includes a cutting chamber, a first air blowing component, an air extraction component, and a laser cutting component. The cutting chamber includes a top wall, a bottom wall, and a front wall, where the top wall is provided with a material inlet, and the bottom wall is provided with a material outlet; one end of the front wall is connected with the top wall, another end of the front wall is connected with the bottom wall, the front wall is provided with a cutting window for laser to pass through, the laser cutting component is arranged adjacent to the cutting chamber, and the laser cutting component is capable of emitting laser through the cutting window and cutting a material belt in the cutting chamber.

## Description

### TECHNICAL FIELD

The present disclosure relates to the technical field of pole piece processing apparatuses, and in particular, to a dust removal laser cutting apparatus.

### BACKGROUND

A battery is used more widely. A pole piece is a main component of a battery. In a process of manufacturing the pole piece, the use of a laser cutting device is one of the main methods to manufacture the pole piece. Dust may be generated in a cutting process. If the dust adheres to the pole piece and is carried into subsequent processes, or even is involved inside the battery, the dust may easily pierce a diaphragm in a cell, resulting in a micro-short circuit of the battery, and even spontaneous combustion and explosion of the battery.

Laser cutting is to irradiate laser onto a cut pole piece material belt through a laser head. A high temperature of the laser melts or gasifies materials on a surface of the pole piece material belt and a metal foil in the middle of the pole piece material belt. In this process, dust may be generated. The dust is diffused in the cutting chamber and adheres to an adsorption belt and a pole piece, affecting a service life of the adsorption belt and polluting the pole piece.

At present, a main dust removal method of laser cutting is to arrange a dust hood on one side of the cutting chamber, and at the same time, arrange a standard air knife on the opposite side of the dust hood to blow air to a cutting area. However, this method mainly removes dust from a cutting point. A dust removal range is overly concentrated, and airflow affects stability of the pole piece at the cutting point, thereby affecting a laser cutting effect, and resulting in poor control of air blowing intensity and an unsatisfactory dust removal effect.

### SUMMARY

In order to overcome the shortcomings of the prior art, the present disclosure provides a dust removal laser cutting apparatus with small airflow disturbance and stable cutting.

The technical solution used by the present disclosure to solve the technical problems is as follows.

A dust removal laser cutting apparatus is provided, including a cutting chamber, a first air blowing component, an air extraction component, and a laser cutting component; where
the cutting chamber includes a top wall, a bottom wall, and a front wall, where the top wall is provided with a material inlet for a pole piece material belt to pass through, and the bottom wall is provided with a material outlet for the pole piece material belt to pass through;
one end of the front wall is connected with the top wall, anther end of the front wall is connected with the bottom wall, the front wall is provided with a cutting window fro laser to pass through, the laser cutting component is arranged adjacent to the cutting chamber, and the laser cutting component is capable of emitting laser through the cutting window and cutting a material belt in the cutting chamber;
the first air blowing component is fixed on one side of the cutting chamber, the air extraction component is arranged on another side of the cutting chamber, and the front wall is located between the first air blowing component and the air extraction component; and
a surface of the first air blowing component facing the air extraction component is uniformly provided with several air blowing ports, and an air blowing direction of the first air blowing component is perpendicular to a conveying direction of the pole piece material belt.

According to the dust removal laser cutting apparatus as described above, the cutting chamber further includes a rear wall arranged opposite to the front wall;
the first air blowing component includes a first air blowing block and a second air blowing block, where one side of the first air blowing block is fixed on one side of the rear wall away from the air extraction component, and one side of the second air blowing block is fixed on one side of the front wall away from the air extraction component; and
a gap is arranged between the first air blowing block and the second air blowing block, and the gap communicates with the material inlet and the material outlet.

The dust removal laser cutting apparatus as described above further includes a material belt conveying component; and
the rear wall is provided with a relief groove, the material belt conveying component passes through the relief groove and is partially located in the cutting chamber, and the material belt conveying component is configured to drive the pole piece material belt of the cutting chamber to move along a direction of the material outlet.

According to the dust removal laser cutting apparatus as described above, a slot is arranged on one side of the cutting chamber adjacent to the air extraction component;
a second air blowing component is fixed on the bottom wall, and the second air blowing component is located between the slot and the material belt conveying component; and
an air blowing direction of the second air blowing component faces the bottom wall, and the second air blowing component is configured to blow dust deposited between the material belt conveying component and the bottom wall.

According to the dust removal laser cutting apparatus as described above, the second air blowing component includes a dust removal block and an air blowing pipe;
the dust removal block is fixed on the bottom wall and the rear wall, a surface of the dust removal block facing the material belt conveying component is a first inclined surface, and the air blowing pipe is fixed on the top of the inclined surface of the dust removal block; and
several dust removal air blowing ports (621) are provided on the air blowing pipe toward a direction of the first inclined surface.

According to the dust removal laser cutting apparatus as described above, a surface of the dust removal block facing the front wall is a second inclined surface, the second inclined surface is arranged adjacent to the first inclined surface, and a top edge of the second inclined surface intersects with a top edge of the first inclined surface.

According to the dust removal laser cutting apparatus as described above, the second air blowing component has a length D along a direction from the rear wall to the front wall, and the material belt conveying component in the cutting chamber has a length d; and
D and d satisfy a relationship: D > d.

The dust removal laser cutting apparatus as described above further includes a scrap material belt dust removal component, where the scrap material belt dust removal component partially extends into the cutting chamber from the material outlet to absorb scrap generated in a cutting process and take the scrap out of the cutting chamber.

According to the dust removal laser cutting apparatus as described above, the scrap material belt dust removal component includes a support, a scrap adsorption conveyor belt, a dust extractor, and a dust removal brush; and
the scrap adsorption conveyor belt is rotatably arranged on the support, the dust extractor is provided with a dust extraction opening, the support is partially located in the dust extraction opening, the dust removal brush is fixedly arranged on the dust extraction opening, and the dust removal brush is configured to remove dust on the scrap adsorption conveyor belt.

According to the dust removal laser cutting apparatus as described above, a joint between the first air blowing block and/or the second air blowing block and the bottom wall is provided with several bottom air blowing ports.

The present disclosure has the following beneficial effect.

The pole piece material belt enters from the material inlet and exits from the material outlet. During cutting, the laser cutting component emits laser through the cutting window and cuts the pole piece material belt in the cutting chamber. At the same time, the first air blowing component is started to blow air, so that dust generated in the cutting process is blown into the air extraction component, thereby reducing adsorption of the dust on the pole piece material belt. During cutting, a cutting surface of the pole piece material belt is perpendicular to an air blowing direction of the first air blowing component. While removing dust, the pole piece material belt can be prevented from shaking caused by direct impact of airflow on the cutting surface, and air blowing ports are uniformly arranged on a surface of the first air blowing component and that faces the air extraction component. Therefore, pressures borne by the pole piece material belt in all parts of the cutting chamber are the same. Disturbance of airflow to the pole piece material belt is small, the relative position between the laser and the material belt remains stable, and stability of the cutting process can be ensured.

### BRIEF DESCRIPTION OF THE DRAWINGS

The present disclosure will be further explained with reference to the drawings and embodiments.
FIG. 1 is a schematic diagram of a structure of a dust removal laser cutting apparatus in which an air extraction component and a laser cutting component are omitted;
FIG. 2 is first schematic diagram of some structures of a dust removal laser cutting apparatus in which an air extraction component and a laser cutting component are omitted;
FIG. 3 is a second schematic diagram of some structures of a dust removal laser cutting apparatus in which an air extraction component and a laser cutting component are omitted;
FIG. 4 is a schematic diagram of a three-dimensional structure of a first air blowing component;
FIG. 5 is a schematic diagram of a three-dimensional structure of a scrap material belt dust removal component; and
FIG. 6 is a schematic diagram of a three-dimensional structure of an air extraction component.

Reference numbers are as follows:
1, cutting chamber; 11, top wall; 111, material inlet; 12, bottom wall; 121, material outlet; 13, front wall; 131, cutting window; 14, back wall; 141, relief groove; 15, slot;
2, first air blowing component; 21, first air blowing block; 22, second air blowing block; 23, gap; 26, first speed regulating valve;
3, air extraction component; 31, second speed regulating valve;
5, material belt conveying component;
61, dust removal block; 209, air blowing pipe;
7, scrap material belt dust removal component; 71, support; 72, scrap adsorption conveyor belt; 74, dust removal brush.

### DETAILED DESCRIPTION OF THE EMBODIMENTS

In the following, concepts, specific structures and technical effects of the present disclosure will be clearly and completely described with reference to embodiments and drawings, so as to fully understand objectives, features and effects of the present disclosure. Obviously, the described embodiments are only some embodiments of the present disclosure, rather than all of the embodiments. Based on the embodiments of the present disclosure, other embodiments obtained by those skilled in the art without paying creative labor belong to the scope of protection of the present disclosure. In addition, all the linking/connection relationships involved in the patent do not merely mean that members are directly connected, but that a better connection structure can be formed by adding or reducing connection accessories according to specific implementations. Various technical features in the present disclosure can be combined interactively on the premise of not conflicting with each other.

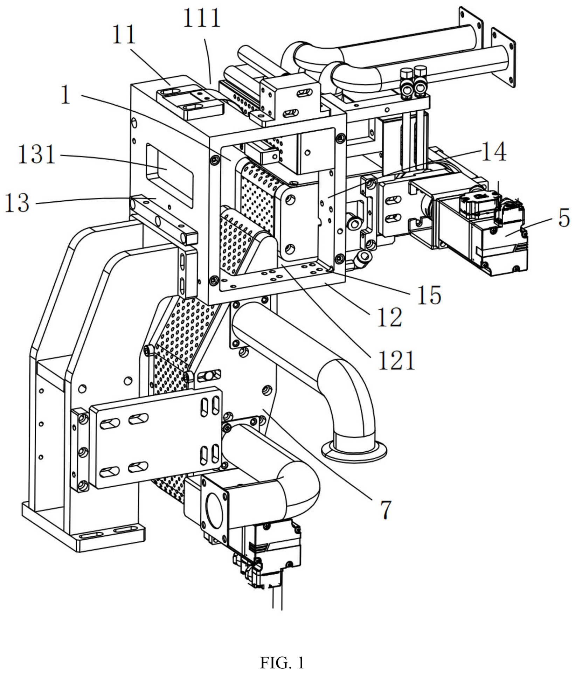

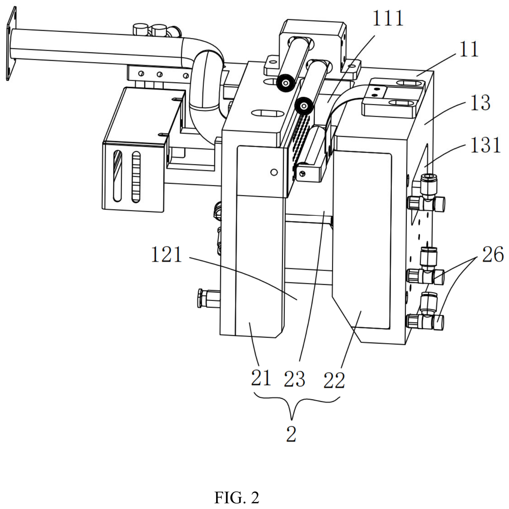

With reference to FIG. 1, FIG. 2, and FIG. 6, a dust removal laser cutting apparatus includes a cutting chamber 1, a first air blowing component 2, an air extraction component 3, and a laser cutting component.

The cutting chamber 1 includes a top wall 11, a bottom wall 12, and a front wall 13. The top wall 11 is provided with a material inlet 111 for a pole piece material belt to pass through, and the bottom wall 12 is provided with a material outlet 121 for the pole piece material belt to pass through.

One end of the front wall 13 is connected with the top wall 11, and another end of the front wall 13 is connected with the bottom wall 12. The front wall 13 is provided with a cutting window 131 for laser to pass through. The laser cutting component is arranged adjacent to the cutting chamber 1. The laser cutting component is capable of emitting laser through the cutting window 131 and cutting a material belt in the cutting chamber 1.

The first air blowing component 2 is fixed on one side of the cutting chamber 1. The air extraction component 3 is arranged on another side of the cutting chamber 1. The front wall 13 is located between the first air blowing component 2 and the air extraction component 3.

A surface of the first air blowing component 2 facing the air extraction component 3 is uniformly provided with several air blowing ports, and an air blowing direction of the first air blowing component 2 is perpendicular to a conveying direction of the pole piece material belt.

When the apparatus works, the pole piece material belt enters from the material inlet 111 and exits from the material outlet 121. The laser cutting component emits laser through the cutting window 131 and cuts the pole piece material belt in the cutting chamber 1. At the same time, the first air blowing component 2 is started to blow air, so that dust generated in the cutting process is blown into the air extraction component 3, thereby reducing adsorption of the dust on the pole piece material belt. During cutting, a cutting surface of the pole piece material belt is perpendicular to an air blowing direction of the first air blowing component 2. Moreover, the air blowing ports are uniformly arranged on a surface of the first air blowing component 2 facing the air extraction component. The air blowing ports are uniformly distributed in the first air blowing component 2, so that relatively gentle convection is generated in the cutting chamber 1, and diffusing dust can effectively enter the air extraction component 3. At the same time, the first air blowing component 2 is prevented from blowing directly at the cutting point, which may affect the cutting stability of pole piece. While removing dust, the pole piece material belt can be prevented from shaking caused by direct impact of airflow on the cutting surface. Therefore, pressures borne by the pole piece material belt in all parts of the cutting chamber 1 are the same. Disturbance of airflow to the pole piece material belt is small, the relative position between the laser and the material belt remains stable, and stability of the cutting process can be ensured.

Specifically, the laser cutting component is configured to cut the pole piece material belt into pole pieces. Cutting is performed on one side close to the air extraction component 3. Along a direction of airflow, less dust passes through a pole piece body, and a path of dust blown to the air extraction component 3 is also the shortest. At this time, a small stock of dust is in the cutting chamber 1, which reduces the probability of dust adhering to the pole piece material belt.

In one embodiment, the cutting chamber 1 further includes a rear wall 14 arranged opposite to the front wall 13.

The first air blowing module 2 includes a first air blowing block 21 and a second air blowing block 22. One side of the first air blowing block 21 is fixed on one side of the rear wall 14 away from the air extraction component 3. One side of the second air blowing block 22 is fixed on one side of the front wall 13 away from the air extraction component 3.

A gap 23 is arranged between the first air blowing block 21 and the second air blowing block 22, and the gap 23 communicates with the material inlet 111 and the material outlet 121.

The first air blowing block 21 is responsible for blowing air to one side of the pole piece material belt. The second air blowing block 22 is responsible for blowing air to the other side of the pole piece material belt. The speed of airflow blown by the first air blowing block 21 and the second air blowing block 22 is the same. Pressures on two sides of the pole piece material belt are the same. The pole piece material belt is less likely to deviate and swing.

Further, the dust removal laser cutting apparatus further includes a material belt conveying component 5.

The rear wall 14 is provided with a relief groove 141. The material belt conveying component 5 passes through the relief groove 141 and is partially located in the cutting chamber 1. The material belt conveying component 5 is configured to drive the pole piece material beltof the cutting chamber 1 to move along a direction of the material outlet 121. The material belt conveying component 5 is used as a power source, so that the pole piece material beltmoves along a single direction.

Specifically, the material belt conveying component 5 is provided with a vacuum adsorption belt. During rotation, the vacuum adsorption belt adsorbs the pole piece material belt, thereby driving the pole piece material belt to move.

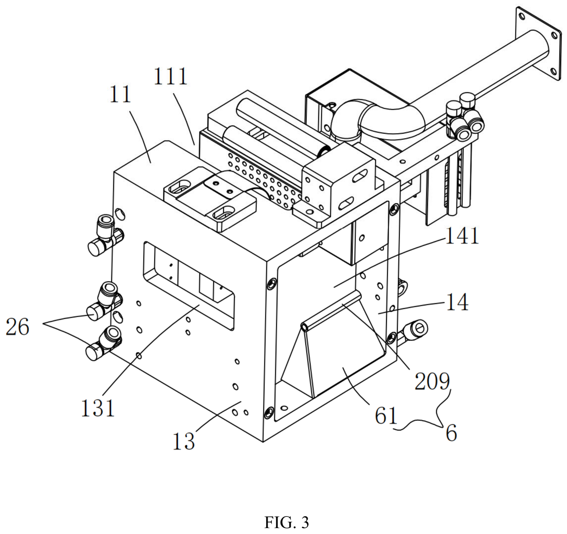

Because the material belt conveying component 5 is partially located in the cutting chamber 1, when the first air blowing component 2 blows air, the material belt conveying component 5 may block part of the airflow. There is no airflow between the material belt conveying component 5 and the bottom wall 12, so that it is easy for dust to be accumulated here. After dust here is accumulated to a certain amount, it is easy for dust to contact with the pole piece material belt and be adsorbed on the pole piece material belt, thereby affecting a dust removal effect of the apparatus. In order to solve the above technical problems, with reference to FIG. 1 to FIG. 4, specifically, a slot 15 is arranged on one side of the cutting chamber 1 adjacent to the air extraction component 3.

A second air blowing component is fixed on the bottom wall 12, and the second air blowing component is located between the slot 15 and the material belt conveying component 5.

An air blowing direction of the second air blowing component faces the bottom wall 12, and the second air blowing component is configured to blow dust deposited between the material belt conveying component 5 and the bottom wall 12. The airflow of the second air blowing component changes directions after passing through the bottom wall 1. The dust rises, and is blown toward a side wall of the material belt conveying component 5. At the same time, the air extraction component 3 extracts the dust. The second air blowing component and the air extraction component 3 cooperate with each other to solve the problem of dust accumulation between the material belt conveying component 5 and the bottom wall 12, and further reduce adsorption of dust on the material belt while ensuring smooth conveying of the pole piece material belt.

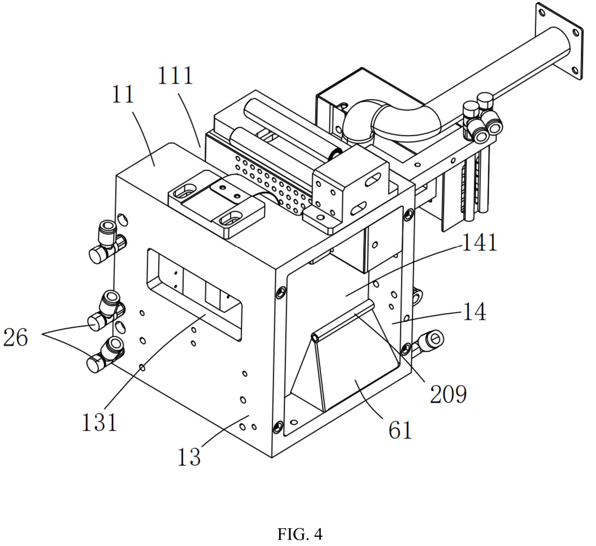

With reference to FIG. 4, more specifically, the second air blowing component includes a dust removal block 61 and an air blowing pipe 209.

The dust removal block 61 is fixed on the bottom wall 12 and the rear wall 14. A surface of the dust removal block 61 and that faces the material belt conveying component 5 is a first inclined surface. The air blowing pipe 209 is fixed on the top of the inclined surface of the dust removal block 61.

Several dust removal air blowing ports 621 are provided on the air blowing pipe 209 to a direction of the first inclined surface.

The first inclined surface is used as the inclined surface of guiding airflow. An included angle is formed between the airflow blown by the dust removal air blowing port 621 and the bottom wall 12, so that dust between the first inclined surface and the bottom wall 12 is blown to a direction of the material belt conveying component 5. Airflow is blocked by the material belt conveying component 5 to drive the dust to be blown upward and enter the dust extraction range of the air extraction component 3, thereby reducing accumulation of dust between the second air blowing component and the bottom wall 12.

More specifically, a surface of the dust removal block 61 facing the front wall 13 is a second inclined surface. The second inclined surface is arranged adjacent to the first inclined surface, and a top edge of the second inclined surface intersects with a top edge of the first inclined surface.

The second inclined surface is also used to guide the direction of airflow blown by the dust removal air blowing port 621, further reducing accumulation of dust between the second air blowing component and the bottom wall 12.

In any of the above embodiments, the second air blowing component has a length D along a direction from the rear wall 14 to the front wall 13, and the material belt conveying component 5 in the cutting chamber 1 has a length d; and D and d satisfy a relationship: D > d. It is ensured that there is no accumulation of dust between the second air blowing component and the material belt conveying component 5. It is ensured that air flows everywhere in the cutting chamber 1, and there is no dead angle for accumulation of dust, thereby further reducing the possibility of dust adhering to the pole piece material belt.

In one embodiment, the dust removal laser cutting apparatus further includes a scrap material belt dust removal component 7. The scrap material belt dust removal component 7 partially extends into the cutting chamber 1 from the material outlet 121 to absorb scrap generated in a cutting process and take the scrap out of the cutting chamber 1.

In the cutting chamber 1, the pole piece material belt is absorbed by the material belt conveying component 5 and the scrap material belt dust removing component 7. The pole piece material belt has two stable support points, thereby further reducing shaking of the pole piece material belt in the cutting process.

Specifically, along a direction from the rear wall 14 to the front wall 13, the sum of a length of the scrap material belt dust removal component 7 in the cutting chamber 1 and d is less than D.

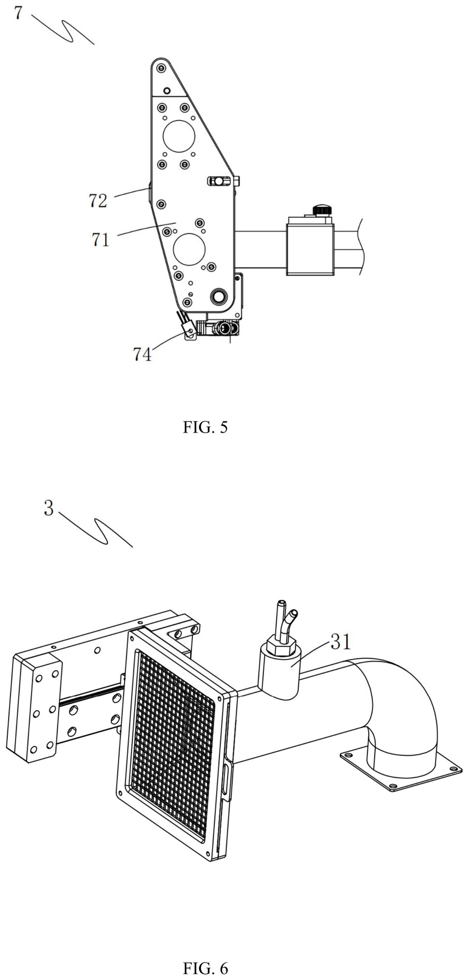

With reference to FIG. 5, further, the scrap material belt dust removal component 7 includes a support 71, a scrap adsorption conveyor belt 72, a dust extractor, and a dust removal brush 74.

The scrap adsorption conveyor belt 72 is rotatably arranged on the support 71. The dust extractor is located below the support 71. The dust extractor is provided with a dust extraction opening. The support 71 is partially located in the dust extraction opening. The dust removal brush 74 is fixedly arranged on the dust extraction opening. The dust removal brush 74 is configured to remove dust on the scrap adsorption conveyor belt 72.

Because the scrap adsorption conveyor belt 72 fixes the pole piece material belt by an adsorption force, the scrap adsorption conveyor belt 72, which is partially in the cutting chamber 1 and is not in contact with the scrap adsorption conveyor belt 72, may adsorb a small amount of dust. If the dust is not cleaned in time, the dust may be accumulated on the scrap adsorption conveyor belt 72, thereby blocking the scrap adsorption conveyor belt 72 and affecting the effect of adsorbing and fixing the scrap. Therefore, a dust removal brush 74 is arranged to remove the dust on the scrap adsorption conveyor belt 72.

The dust removal brush 74 is fixedly arranged on the dust extraction opening, so that a distance between the dust removal brush 74 and the dust extractor is minimized. The dust on the scrap adsorption conveyor belt 72 is absorbed into the dust extractor under the action of gravity and an adsorption force after being swept off, thereby reducing the possibility of dust flying in the environment outside the apparatus and improving cleanliness of a workshop.

A joint between the first air blowing block 21 and/or the second air blowing block 22 and the bottom wall 12 is provided with several bottom air blowing ports (not shown in the figure). The bottom air blowing ports are configured to blow dust deposited between the first air blowing block 21 and/or the second air blowing block 22 and the bottom wall 12, thereby reducing diffusion of dust in the cutting chamber 1.

In one embodiment, the first air blowing component 2 is provided with a first speed regulating valve 26 which is configured to control the air blowing speed, and/or the air extraction component 3 is provided with a second speed regulating valve 31 which is configured to control the air extraction speed. The air blowing speed of the first speed regulating valve 26 and the air extraction speed of the second speed regulating valve 31 are adjusted according to the amount of dust, thereby reducing the content and residence time of dust in the cutting chamber 1, and further reducing the possibility of dust adhering to the pole piece material belt.

The above is a detailed description of the preferred embodiments of the present disclosure, but the present disclosure is not limited to the embodiment. Those skilled in the art can make various equivalent modifications or substitutions without departing from the spirit of the present disclosure, which are included in the scope defined by the claims of the present disclosure.

## Claims

1. A dust-removable laser cutting apparatus, comprising a cutting chamber (1), a first air blowing component (2), an air extraction component (3), and a laser cutting component; wherein
the cutting chamber (1) comprises a top wall (11), a bottom wall (12), and a front wall (13), wherein the top wall (11) is provided with a material inlet (111) for a pole piece material belt to pass through, and the bottom wall (12) is provided with a material outlet (121) for the pole piece material belt to pass through;
one end of the front wall (13) is connected with the top wall (11), another end of the front wall (13) is connected with the bottom wall (12), the front wall (13) is provided with a cutting window (131) for laser to pass through, the laser cutting component is arranged adjacent to the cutting chamber (1), and the laser cutting component is capable of emitting laser through the cutting window (131) and cutting a material belt in the cutting chamber (1);
the first air blowing component (2) is fixed on one side of the cutting chamber (1), the air extraction component (3) is arranged on another side of the cutting chamber (1), and the front wall (13) is located between the first air blowing component (2) and the air extraction component (3); and
a surface of the first air blowing component (2) facing the air extraction component (3) is uniformly provided with several air blowing ports, and an air blowing direction of the first air blowing component (2) is perpendicular to a conveying direction of the pole piece material belt.

2. The dust-removable laser cutting apparatus according to claim 1, wherein the cutting chamber (1) further comprises a rear wall (14) arranged opposite to the front wall (13);
the first air blowing component (2) comprises a first air blowing block (21) and a second air blowing block (22), wherein one side of the first air blowing block (21) is fixed on one side of the rear wall (14) away from the air extraction component (3), and one side of the second air blowing block (22) is fixed on one side of the front wall (13) away from the air extraction component (3); and
a gap (23) is arranged between the first air blowing block (21) and the second air blowing block (22), and the gap (23) communicates with the material inlet (111) and the material outlet (121).

3. The dust-removable laser cutting apparatus according to claim 2, further comprising a material belt conveying component (5); and
the rear wall (14) is provided with a relief groove (141), the material belt conveying component (5) passes through the relief groove (141) and is partially located in the cutting chamber (1), and the material belt conveying component (5) is configured to drive the pole piece material belt in the cutting chamber (1) to move along a direction of the material outlet (121).

4. The dust-removable laser cutting apparatus according to claim 3, wherein a slot (15) is arranged on one side of the cutting chamber (1) adjacent to the air extraction component (3);
a second air blowing component is fixed on the bottom wall (12), and the second air blowing component is located between the slot (15) and the material belt conveying component (5); and
an air blowing direction of the second air blowing component faces the bottom wall (12), and the second air blowing component is configured to blow dust deposited between the material belt conveying component (5) and the bottom wall (12).

5. The dust-removable laser cutting apparatus according to claim 4, wherein the second air blowing component comprises a dust removal block (61) and an air blowing pipe (209);
the dust removal block (61) is fixed on the bottom wall (12) and the rear wall (14), a surface of the dust removal block (61) facing the material belt conveying component (5) is a first inclined surface, and the air blowing pipe (209) is fixed on the top of the inclined surface of the dust removal block (61); and
several dust removal air blowing ports (621) are provided on the air blowing pipe (209) toward a direction of the first inclined surface.

6. The dust-removable laser cutting apparatus according to claim 5, wherein a surface of the dust removal block (61) facing the front wall (13) is a second inclined surface, the second inclined surface is arranged adjacent to the first inclined surface, and a top edge of the second inclined surface intersects with a top edge of the first inclined surface.

7. The dust-removable laser cutting apparatus according to claim 4 or 5, wherein the second air blowing component has a length D along a direction from the rear wall (14) to the front wall (13), and the material belt conveying component (5) in the cutting chamber (1) has a length d; and
D and d satisfy a relationship: D > d.

8. The dust-removable laser cutting apparatus according to claim 1, further comprising a scrap material belt dust removal component (7), wherein the scrap material belt dust removal component (7) partially extends into the cutting chamber (1) from the material outlet (121) to absorb scrap generated in a cutting process and take the scrap out of the cutting chamber (1).

9. The dust-removable laser cutting apparatus according to claim 8, wherein the scrap material belt dust removal component (7) comprises a support (71), a scrap adsorption conveyor belt (72), a dust extractor, and a dust removal brush (74); and
the scrap adsorption conveyor belt (72) is rotatably arranged on the support (71), the dust extractor is provided with a dust extraction opening, the support (71) is partially located in the dust extraction opening, the dust removal brush (74) is fixedly arranged on the dust extraction opening, and the dust removal brush (74) is configured to remove dust on the scrap adsorption conveyor belt (72).

10. The dust-removable laser cutting apparatus according to claim 2, wherein a joint between the first air blowing block (21) and/or the second air blowing block (22) and the bottom wall (12) is provided with several bottom air blowing ports.
